# EUROPÄISCHE PATENTSCHRIFT

(11) **EP 4 371 830 B1**
(45) Veröffentlichungstag und Bekanntmachung des Hinweises auf die Patenterteilung: **08.07.2026**
(21) Anmeldenummer: 23197926.1
(22) Anmeldetag: 18.09.2023
(51) Int. Cl.: B60S 1/34, B60S 1/52, A01D 41/12, B60S 1/04

(54) **SELBSTFAHRENDE LANDWIRTSCHAFTLICHE ERNTEMASCHINE MIT EINER WISCHERANLAGE**
SELF-PROPELLED AGRICULTURAL HARVESTER WITH A WIPER SYSTEM
MOISSONNEUSE AGRICOLE AUTOMOBILE DOTÉE D'UN SYSTÈME D'ESSUIE-GLACE

(30) Priorität: 16.11.2022 DE 102022130334
(43) Veröffentlichungstag der Anmeldung: 22.05.2024
(73) Patentinhaber: CLAAS Selbstfahrende Erntemaschinen GmbH, 33428 Harsewinkel (DE)
(72) Erfinder: Deppe, Markus, 33790 Halle/Westf. (DE); Mark, Manuel, 33617 Bielefeld (DE); Ossenbrink, Nils, 49084 Osnabrück (DE)
(74) Vertreter: CLAAS Gruppe

(56) Entgegenhaltungen:
- EP-A1- 2 601 827
- DE-A1- 102019 121 910
- FR-A- 1 228 171
- US-A- 5 986 371

## Beschreibung

Die vorliegende Anmeldung betrifft eine Kabine einer landwirtschaftlichen Erntemaschine, insbesondere eines Feldhäckslers, mit einer Wischeranlage zur Reinigung einer Scheibe, insbesondere Frontscheibe, der Kabine gemäß dem Oberbegriff des unabhängigen Patentanspruchs 1 sowie eine landwirtschaftliche Erntemaschine, insbesondere einen Feldhäcksler, mit einer solchen Kabine gemäß dem unabhängigen Patentanspruch 15.

Wischeranlagen für Kraftfahrzeuge sind aus dem Stand der Technik hinreichend bekannt und dienen dazu eine Heck- oder Frontscheibe eines Kraftfahrzeugs bei Regen und/oder bei Verunreinigungen auf der Scheibe zu reinigen. Hierzu weisen die Wischeranlagen einen Wischerarm mit einem Wischerblatt sowie eine oder mehrere Spritzdüsen zur Applikation von Waschflüssigkeit auf. Solche Spritzdüsen sind in der Regel auf einem Karosserieelement, beispielsweise einer Motorhaube, des Kraftfahrzeugs oder im Bereich einer den Wischerarm der Wischeranlage antreibenden Wischerwelle angeordnet bzw. ausgebildet.

So ist beispielsweise aus der DE 35 11 811 A1 eine Reinigungseinrichtung für Scheiben von Kraftfahrzeugen bekannt, die eine Wischerwelle umfasst, die in einer Lagerbuchse gelagert und durch eine Bohrung in einem Karosserieteil geführt ist. Die Lagerbuchse ist mittels einer Befestigungsmutter am Karosserieteil fixiert. Die Reinigungseinrichtung ist weiterhin mit einem feststehenden Düsenkörper mit einer Spritzdüse ausgestattet, der als Abdeckkappe über die Befestigungsmutter gestülpt ist, so dass die Spritzdüse in Höhe der von dem Karosserieteil abgewandten Seite der Befestigungsmutter im Düsenkörper sitzt.

Anders als bei Kraftfahrzeugen unterliegt die Reinigung von Scheiben, insbesondere einer Frontscheibe, einer Kabine einer landwirtschaftlichen Erntemaschine anderen Randbedingungen. Insbesondere bei der Ernte von Erntegut, beispielsweise mittels eines Feldhäckslers, entsteht eine erhebliche Menge an Verunreinigungen, die auf die Frontscheibe der Kabine der Erntemaschine während des Erntevorgangs gelangt. Weiterhin zeichnen sich Frontscheiben einer landwirtschaftlichen Erntemaschine dadurch aus, dass diese im Vergleich zu Frontscheiben eines Kraftfahrzeugs eine erheblich größere Erstreckung in Längs- und Querrichtung aufweisen. Dies ist erforderlich, damit der Bediener der landwirtschaftlichen Erntemaschine während des Erntevorgangs einen guten Überblick über den abzuerntenden Erntegutbestand sowie das Vorsatzgerät der landwirtschaftlichen Erntemaschine, mittels dem der Erntevorgang durchgeführt wird, hat. Diese geometrische Ausgestaltung bedingt, dass ein Wischerarm einer Wischeranlage für eine ausreichende Reinigung der Frontscheibe der landwirtschaftlichen Erntemaschine, anders als bei herkömmlichen Kraftfahrzeugen, nicht an Karosserieelementen der landwirtschaftlichen Erntemaschine montiert werden kann, sondern eine Positionierung in einem Mittenbereich der Frontscheibe einnehmen muss.

Eine Wischeranlage zur Reinigung von Scheiben einer Kabine einer landwirtschaftlichen Erntemaschine gemäß den oberbegrifflichen Merkmalen des unabhängigen Patentanspruchs 1 ist beispielsweise aus der EP 2 601 827 A1 bekannt.

Demnach ergibt sich für eine zuverlässige Reinigung einer Frontscheibe einer Kabine einer landwirtschaftlichen Erntemaschine für Wischeranlagen ein erhöhter konstruktiver Aufwand.

Ausgehend hiervon ist es demnach die Aufgabe der vorliegenden Erfindung, eine Kabine einer landwirtschaftlichen Erntemaschine mit einer Wischeranlage anzugeben, die eine zuverlässige Reinigung eines Großteils der außenseitigen Frontscheibenfläche der Kabine in allen Betriebssituationen der landwirtschaftlichen Erntemaschine ermöglicht.

Diese Aufgabe wird erfindungsgemäß durch die Merkmale des unabhängigen Patentanspruchs 1 gelöst, wobei vorteilhafte Weiterbildungen der erfindungsgemäßen Kabine Gegenstand der entsprechenden abhängigen Patentansprüche 2 bis 14 sind.

Demnach betrifft die vorliegende Erfindung eine Kabine einer landwirtschaftlichen Erntemaschine, insbesondere eines Feldhäckslers, mit einer Wischeranlage zur Reinigung einer Scheibe, insbesondere einer Frontscheibe, der Kabine. Die Wischeranlage umfasst einen Wischerarm mit einem Wischerblatt, der an einer durch die Scheibe, insbesondere Frontscheibe, verlaufenden, motorisch antreibbaren Welle drehfest befestigt ist. Die Wischeranlage umfasst weiterhin eine Pumpe zur Förderung von Waschflüssigkeit aus einem Tank zu dem Wischerarm, wobei der Wischerarm während eines Reinigungsvorgangs reversierend zwischen zwei Endstellungen verschwenkbar ist. Die Kabine ist dadurch gekennzeichnet, dass der Wischerarm der Wischeranlage während des Reinigungsvorgangs bei einer Schwenkbewegung von der einen Endstellung in die andere Endstellung der zwei Endstellungen einen Winkelbereich von mehr als 180° abläuft. Der Wischerarm umfasst entlang der Länge des Wischerblatts eine Vielzahl an Spritzdüsen zur Applikation der Waschflüssigkeit auf der Scheibe, insbesondere Frontscheibe, während des Reinigungsvorgangs.

Die erfindungsgemäße Ausgestaltung der Wischeranlage erlaubt es, dass bei einem mittels der Wischeranlage durchgeführten Reinigungsvorgang der Frontscheibe der Kabine ein Großteil der Scheibenfläche von dem Wischerblatt des Wischerarms erfasst und gleichzeitig mittels der Vielzahl an Spritzdüsen mit Waschflüssigkeit benetzt wird. Hierdurch wird der für die Bedienung der Erntemaschine erforderliche Sichtbereich des Bedieners stets und zuverlässig von Verunreinigungen, die während der Ernte entstehen und auf die Frontscheibe gelangen, befreit. Dadurch, dass der Wischerarm entlang der Länge des Wischerblatts die Vielzahl an Spritzdüsen umfasst, wird der gesamte von dem Wischerblatt erfasste Flächenbereich der Frontscheibe mit Waschflüssigkeit benetzt, wodurch auf der außenseitigen Frontscheibenfläche entlang der Länge des Wischerblatts eine zuverlässige Beseitigung der Verunreinigungen stattfindet. Ein Verschmieren von Verunreinigungen in einem ausgehend von der Welle in Radialrichtung betrachteten Innenbereich der außenseitigen Frontscheibenfläche und/oder Außenbereich der außenseitigen Frontscheibenfläche kann hierdurch verhindert werden.

Auch wenn vorrangig die Anwendung der Wischeranlage für eine Frontscheibe der Kabine beschrieben wird, ist die Anwendung gleichermaßen auf alle anderen Scheiben, insbesondere eine Heckscheibe, der Kabine einer landwirtschaftlichen Erntemaschine übertragbar.

Gemäß einer vorteilhaften Weiterbildung der Erfindung ist vorgesehen, dass der Wischerarm während des Reinigungsvorgangs bei der Schwenkbewegung von der einen Endstellung in die andere Endstellung der zwei Endstellungen einen Winkelbereich von 360° oder mehr, vorzugsweise 365°, abläuft

Hierdurch wird es möglich die von dem Wischerblatt bei einem Reinigungsvorgang auf der außenseitigen Frontscheibenfläche entfernten Verunreinigungen in einem Bereich der außenseitigen Frontscheibenfläche zu bewegen, der außerhalb eines Sichtbereichs des Bedieners durch die Frontscheibe liegt. Die Endstellungen des Wischerarms sind vorzugsweise so gewählt, dass sich sowohl die eine Endstellung als auch die andere Endstellung in einem hinter einer Lenksäule liegenden außenseitigen Frontscheibenflächenbereich befindet. Da eine Sicht durch diesen Bereich der Frontscheibe durch die Lenksäule für den Bediener versperrt ist, ist es für den Bediener nicht störend, wenn etwaige Verunreinigungen, die von dem Wischerblatt bei einem Reinigungsvorgang aus dem Sichtbereich der Frontscheibe entfernt werden, dorthin gelangen.

Gemäß einer vorteilhaften Weiterbildung der Erfindung ist vorgesehen, dass die Vielzahl an Spritzdüsen unmittelbar im Wischerblatt ausgebildet ist oder der Wischerarm eine parallel zum Wischerblatt verlaufende Sprühleiste umfasst, in der die Vielzahl an Spritzdüsen ausgebildet ist.

Die Ausgestaltung der Vielzahl an Spritzdüsen im Wischerblatt selbst oder in der parallel zum Wischerblatt verlaufenden Sprühleiste erlaubt es, die Waschflüssigkeit aus unmittelbarer Nähe zur außenseitigen Frontscheibenoberfläche auf diese gezielt zu applizieren. Hierdurch wird sichergestellt, dass die applizierte Waschflüssigkeit auch in den Bereich der Frontscheibe gelangt, der gereinigt werden soll und nicht in einen dem Reinigungs- bzw. Sichtbereich benachbarten Umgebungsbereich appliziert wird, wo die Waschflüssigkeit überhaupt nicht benötigt wird bzw. verwendet werden kann.

Gemäß einer vorteilhaften Weiterbildung der Erfindung ist vorgesehen, dass ein Abstand zwischen den Spritzdüsen der Vielzahl an Spritzdüsen äquidistant entlang der Länge des Wischerblatts ist, gleichmäßig oder progressiv entlang der Länge des Wischerblatts zunimmt oder gleichmäßig oder degressiv entlang der Länge des Wischerblatts abnimmt.

Gemäß einer vorteilhaften Weiterbildung der Erfindung ist vorgesehen, dass die Spritzdüsen der Vielzahl an Spritzdüsen derart ausgebildet sind, dass die mittels der Spritzdüsen auf die Scheibe, insbesondere Frontscheibe, applizierte Menge an Waschflüssigkeit entlang der Länge des Wischerblatts gleichmäßig ist, gleichmäßig oder progressiv zunimmt oder gleichmäßig oder degressiv abnimmt.

Gemäß einer vorteilhaften Weiterbildung der Erfindung ist vorgesehen, dass der Wischerarm entlang der Länge des Wischerblatts mindestens zwei Applikationsbereiche umfasst, wobei sich ein Abstand zwischen den Spritzdüsen und/oder eine Applikationsmenge der Spritzdüsen im ersten Applikationsbereich von einem Abstand zwischen den Spritzdüsen und/oder einer Applikationsmenge im zweiten Applikationsbereich unterscheidet.

Gemäß einer vorteilhaften Weiterbildung der Erfindung ist vorgesehen, dass die Spritzdüsen der Vielzahl an Spritzdüsen derart ausgebildet sind, dass die von jeder Spritzdüse applizierte Waschflüssigkeit als Flachstrahl, Vollstrahl, Hohlkegelstrahl oder Vollkegelstrahl auf die Scheibe, insbesondere Frontscheibe, appliziert wird.

Durch die Möglichkeit einen Abstand zwischen den Spritzdüsen unterschiedlich zu wählen, die applizierte Menge an Waschflüssigkeit entlang der Länge des Wischerblatts zu variieren, die Länge des Wischerblatts in unterschiedliche Applikationsbereiche mit unterschiedlichen Abständen der Spritzdüsen und/oder unterschiedlichen Applikationsmengen zu unterteilen und/oder aus verschiedenen Strahlgeometrien zu wählen sorgt dafür, dass verschiedene Reinigungsverhalten für die Wischeranlage einstellbar sind. Je nach Erntemaschinentyp, Erntebetrieb und/oder Erntebedingungen kann ein optimales Reinigungsverhalten für die Wischeranlage eingestellt werden.

Erfindungsgemäß ist vorgesehen, dass die Wischeranlage eine Drehdurchführung umfasst, die einen an der Scheibe, insbesondere Frontscheibe, angeordneten Stator und einen an dem Stator relativ zu diesem drehbeweglich angeordneten Rotor mit einem Halteelement umfasst, an dem der Wischerarm befestigt ist.

Die Verwendung einer Drehdurchführung mit einem an der Frontscheibe angeordneten Stator und einem an dem Stator relativ zu diesem drehbeweglich angeordneten Rotor, der mit dem Wischerarm drehfest verbunden ist, erlaubt es, dass über den ganzen Winkelbereich zwischen den Endstellungen des Wischerarms, der größer als 180°ist, die Waschflüssigkeit zuverlässig appliziert werden kann, ohne dass es dabei zu einer Kollision und/oder Beschädigung von Komponenten der Wischeranlage durch die reversierende Schwenkbewegung des Wischerarms kommt. Die Drehdurchführung erlaubt demnach die Zufuhr von Waschflüssigkeit aus einem Innenraum der Kabine zum Wischerarm bzw. Wischerblatt der Wischeranlage über den gesamten Schwenkbereich des Wischerarms.

Vorzugsweise ist vorgesehen, dass die Drehdurchführung einen Ringraum umfasst, der zwischen dem Stator und dem Rotor ausgebildet ist und der der Förderung der Waschflüssigkeit von der Pumpe zu dem Wischerarm während des Reinigungsvorgangs dient.

Über den Ringraum wird die von der Pumpe geforderte Waschflüssigkeit zwischen Stator und Rotor übertragen, um dann weiter zu der Vielzahl an Spritzdüsen am Wischerarm gefördert zu werden. Der Ringraum erlaubt eine Drehbewegung des Rotors relativ zum Stator, die durch den drehfesten Verbund mit dem über die Welle angetriebenen Wischerarm induziert wird, wobei in jeder Stellung des Wischerarms Waschflüssigkeit von der Pumpe aus dem Tank zu der Vielzahl an Spritzdüsen gefördert werden kann.

Weiter vorzugsweise ist vorgesehen, dass der zwischen dem Stator und dem Rotor ausgebildete Ringraum mittels mindestens eines Dichtungselements, vorzugsweise eines Dichtungsrings, insbesondere eines O-Rings, abgedichtet ist.

Die Verwendung mindestens eines Dichtungselements sorgt dafür, dass während der Relativbewegung von Stator und Rotor ein Austritt von Waschflüssigkeit aus der Drehdurchführung in einem Bereich, der nicht für die Förderung der Waschflüssigkeit vorgesehen ist, zuverlässig verhindert werden kann.

Gemäß einer vorteilhaften Weiterbildung der Erfindung ist vorgesehen, dass der Stator einen Anschlussstutzen, mittels dem der Stator, vorzugsweise über eine Schlauchleitung, mit der Pumpe zur Förderung der Waschflüssigkeit strömungstechnisch verbunden ist, und einen Kanal, mittels dem der Anschlussstutzen mit dem Ringraum strömungstechnisch verbunden ist, umfasst, wobei in dem Kanal des Stators ein Rückschlagventil angeordnet ist.

Gemäß einer vorteilhaften Weiterbildung der Erfindung ist vorgesehen, dass der Rotor einen Anschlussstutzen, mittels dem der Rotor, vorzugsweise über eine Schlauchleitung, mit dem Wischerarm, insbesondere der Vielzahl an Spritzdüsen, strömungstechnisch verbunden ist, und einen Kanal, mittels dem der Ringraum mit dem Anschlussstutzen strömungstechnisch verbunden ist, umfasst.

Die Ausgestaltung der Drehdurchführung mit Anschlussstutzen und Kanälen zur Förderung der Waschflüssigkeit zum Ringraum und weg vom Ringraum zum Wischerarm erlaubt einen kompakten Aufbau der Drehdurchführung, wodurch die Scheibe als Hindernis für die Förderung der Waschflüssigkeit besonders effizient und mit überschaubarem konstruktiven Aufwand überbrückt werden kann. Das Rückschlagventil, welches vorzugsweise mittels einer federbelasteten Kugel gebildet ist, sorgt dabei dafür, dass schwerkraftbedingt keine Waschflüssigkeit zum Wischerarm bzw. Wischerblatt gefördert wird, wenn die Pumpe deaktiviert ist und ein mit Waschflüssigkeit bevorrateter der Tank höher liegt als eine oder mehrere Spritzdüsen der Vielzahl an Spritzdüsen.

Gemäß einer vorteilhaften Weiterbildung der Erfindung ist vorgesehen, dass die Scheibe, insbesondere Frontscheibe, der Kabine eine Ausnehmung umfasst, in der der Stator der Drehdurchführung angeordnet ist, wobei der Stator an einem die Welle antreibenden Motor befestigt ist.

Hierdurch wird eine stabile Positionierung und Anbindung des Stators realisiert, so dass im Betrieb der Wischeranlage, in dem durch die reversierende Schwenkbewegung des Wischerarms nicht zu vernachlässigende Kräfte und Momente auf die Komponenten der Wischeranlage wirken, stets ein zuverlässiger Betrieb der Wischeranlage und die Dichtigkeit der Komponenten der Wischeranlage erzielt bzw. eingehalten werden.

Gemäß einer vorteilhaften Weiterbildung der Erfindung ist vorgesehen, dass die mit dem Wischerarm drehfest verbundene Welle der Wischeranlage innerhalb des Stators der Drehdurchführung drehbeweglich gelagert ist.

Diese Ausgestaltung begünstigt ebenfalls den kompakten Aufbau der Drehdurchführung und stellt eine besonders effiziente und direkte Führung des Antriebsmoments von dem die Welle antreibenden Motor zum Wischerarm dar.

Gemäß einer vorteilhaften Weiterbildung der Erfindung ist vorgesehen, dass die Pumpe zur Förderung der Waschflüssigkeit zu dem Wischerarm, der Motor zum Antreiben der Welle der Wischeranlage und/oder der Tank zwischen einer Lenksäule und der Frontscheibe im Kabineninneren angeordnet ist.

Hierdurch werden die für den Betrieb der Wischeranlage notwendigen Komponenten, die einen gewissen Bauraum beanspruchen, aus dem Sichtfeld des Bedieners verlagert. Gleichzeitig wird hierdurch ein kompakter Aufbau der gesamten Wischeranlage realisiert.

Die erfindungsgemäße Aufgabe wird ferner durch eine landwirtschaftliche Erntemaschine, insbesondere einen Feldhäcksler, gemäß dem unabhängigen Patentanspruch 15 gelöst.

Die vorliegende Erfindung wird nachstehend anhand der in den Figuren abgebildeten Ausführungsformen näher beschrieben.

Es zeigen:
- FIG. 1: eine schematische und exemplarische Frontansicht einer erfindungsgemäßen selbstfahrenden landwirtschaftlichen Erntemaschine in Gestalt eines Feldhäckslers;
- FIG. 2: eine schematische und exemplarische Darstellung einer erfindungsgemäßen Wischeranlage der landwirtschaftlichen Erntemaschine gemäß FIG. 1;
- FIG. 3: eine schematische und exemplarische Schnittdarstellung der Wischeranlage gemäß FIG. 2;
- FIG. 4: eine schematische und exemplarische Darstellung einer erfindungsgemäßen Drehdurchführung der Wischeranlage aus den FIGs. 2 und 3; und
- FIG. 5: eine schematische und exemplarische Schnittdarstellung der Drehdurchführung aus FIG. 4.

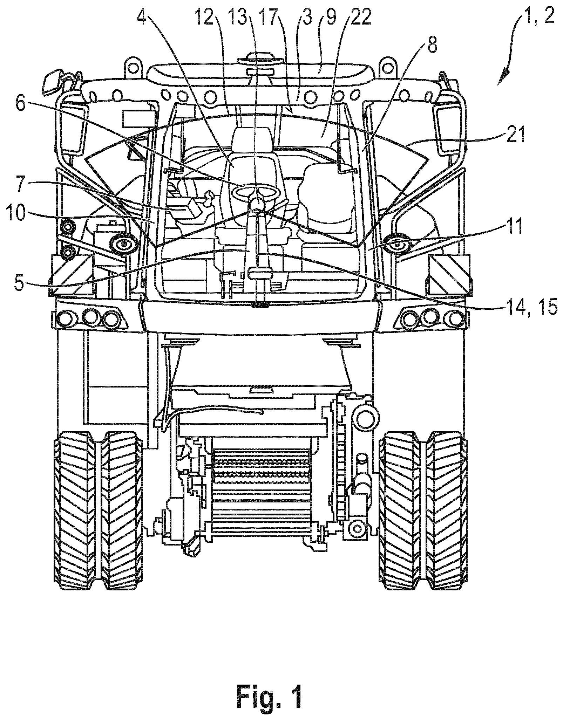

FIG. 1 zeigt eine schematische und exemplarische Darstellung einer erfindungsgemäßen selbstfahrenden landwirtschaftlichen Erntemaschine 1 in Gestalt eines Feldhäckslers 2, dessen grundsätzlicher Aufbau bekannt ist. Die landwirtschaftliche Erntemaschine 1 umfasst demnach eine Mehrzahl an Arbeitsaggregaten, die dem Antrieb der landwirtschaftlichen Erntemaschine 1, der Ernte von auf einer landwirtschaftlichen Fläche angebauten Erntegut und der Verarbeitung des geernteten Ernteguts dienen. Zur Steuerung sowie allgemeinen Überwachung eines Betriebs der landwirtschaftlichen Erntemaschine 1 umfasst selbige eine erfindungsgemäße Kabine 3, in der ein - in den FIGs. nicht dargestellter - Bediener auf einem Fahrersitz 4 Platz nehmen kann. Die Kabine 3 umfasst neben dem Fahrersitz 4 weiterhin eine Lenksäule 5 mit einem Lenkrad 6 zur Steuerung der landwirtschaftlichen Erntemaschine 1 und eine Eingabeeinheit 7, mittels der der Bediener Eingaben, insbesondere solche betreffend den Betrieb der landwirtschaftlichen Erntemaschine 1, vornehmen kann. Ferner umfasst die Kabine 3 eine Tragstruktur 8, von der in FIG. 1 ein Dach 9 sowie zwei Tragsäulen 10, 11, sogenannte A-Säulen der Tragstruktur 8, dargestellt sind. Zwischen den Tragsäulen 10, 11 erstreckt sich in Querrichtung der landwirtschaftlichen Erntemaschine 1 eine Frontscheibe 12, die einen vorderen räumlichen Abschluss der Kabine 3 bildet. Neben der Frontscheibe 12 umfasst die Kabine 1 an ihren Seiten jeweils eine - in FIG. 1 nicht sichtbare - Seitenscheibe, wobei sich die Seitenscheiben zwischen einer jeweiligen Tragsäule 10, 11 und einer zugeordneten hinteren - in FIG. 1 nicht sichtbaren - Tragsäule, eine sogenannte B-Säule der Tragstruktur 8, erstrecken, sowie eine Heckscheibe, wobei sich die Heckscheibe zwischen den hinteren - in FIG. 1 nicht sichtbaren - Tragsäulen, den B-Säulen, erstreckt.

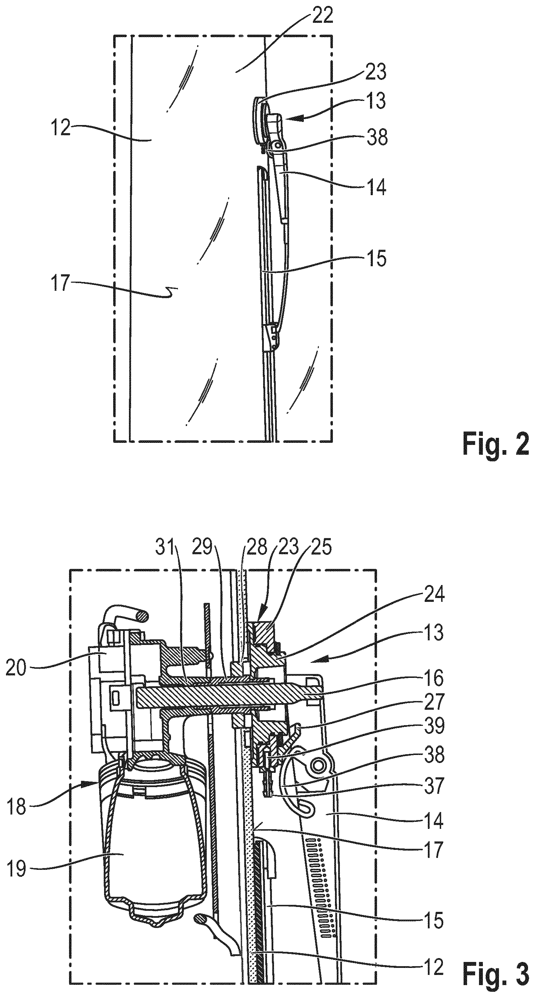

Die Kabine 1 umfasst weiterhin eine Wischeranlage 13 zur Reinigung der Scheiben, insbesondere der Frontscheibe 12, der Kabine 1. Wie insbesondere in den FIGs. 2 und 3 zu sehen, umfasst die Wischeranlage 13 einen Wischerarm 14, an dem ein Wischerblatt 15 befestigt bzw. montiert ist. Der Wischerarm 14 ist an einer durch die Frontscheibe 12 verlaufenden und motorisch antreibbaren Welle 16 drehfest befestigt bzw. montiert. Mit anderen Worten, bei einem Antrieb der Welle 16 wird der Wischerarm 14, der mit seinem Wischerblatt 15 auf einer außenseitigen Oberfläche 17 der Frontscheibe 12 aufliegt, verschwenkt. Der Wischerarm 14 mit Wischerblatt 15 ist derart an der Frontscheibe 12 angeordnet, dass eine Rotationsachse, um die der Wischerarm 14 bei Antrieb der Welle 16 verschwenkt wird, zumindest in Querrichtung der Frontscheibe 12 bzw. Kabine 1 mittig durch die Frontscheibe 12 verläuft. Die Rotationsachse kann auch in vertikaler Richtung der Frontscheibe 12 bzw. Kabine 1 mittig durch die Frontscheibe 12 verlaufen. Sie kann aber auch lediglich in vertikaler Richtung der Frontscheibe 12 bzw. Kabine 1 in der Nähe der Mitte durch die Frontscheibe 12 verlaufen. Die Wischeranlage 13 umfasst weiterhin eine Pumpe 18, die der Förderung von Waschflüssigkeit aus einem Tank 19 zu dem Wischerarm 14, insbesondere dem Wischerblatt 15, dient. Die Pumpe 18 zur Förderung der Waschflüssigkeit zu dem Wischerarm 14, der Tank 19, der die Waschflüssigkeit bevorratet, sowie ein Motor 20, der mit der Welle 16 zum Antreiben des Wischerarms 14 verbunden ist sind vorzugsweise zwischen der Lenksäule 5 und der Frontscheibe 12 im Kabineninneren angeordnet, wodurch diese Komponenten nicht in einem Sichtbereich des auf dem Fahrersitz 4 in der Kabine 1 sitzenden Bedieners durch die Frontscheibe 12 angeordnet sind. Eine andere Anordnung dieser Komponenten im Kabineninneren ist allerdings gleichermaßen vorstellbar.

Der Wischerarm 14 wird bei bzw. während eines Reinigungsvorgangs reversierend zwischen zwei Endstellungen verschwenkt, von denen zumindest eine beispielhaft FIG. 2 zu entnehmen ist. Der Wischerarm 14 läuft bei einem Antrieb der Welle 16 zwischen den beiden Endstellungen einen gewissen Winkelbereich 21 ab, wobei das Wischerblatt 15 auf der Frontscheibe 12 aufliegt und somit ein außenseitiger Oberflächenbereich 22 der Frontscheibe 12 von Verunreinigungen befreit, also gereinigt, wird. Dieser Oberflächenbereich 22 liegt in einem Sichtbereich des auf dem Fahrersitz 4 in der Kabine 1 sitzenden Bedieners durch die Frontscheibe 12.

Wesentlich ist nun, dass der Wischerarm 14 während des Reinigungsvorgangs bei einer Schwenkbewegung von der einen Endstellung in die andere Endstellung der zwei Endstellungen einen Winkelbereich 21 von mehr als 180°abläuft und entlang der Länge des Wischerblatts 15 eine Vielzahl an - in den FIGs. nicht dargestellten - Spritzdüsen zur Applikation der von der Pumpe 18 zum Wischerarm 14 bzw. Wischerblatt 15 geförderten Waschflüssigkeit auf die Frontscheibe 12 umfasst. Mit anderen Worten, wird durch die erfindungsgemäße Ausgestaltung der Wischeranlage ein Großteil der Sichtfläche des Bedieners durch die Frontscheibe 12 während eines Reinigungsvorgangs zuverlässig von Verunreinigungen befreit.

Gemäß einer bevorzugten Ausführungsform ist es vorgesehen, dass der Wischerarm 14 während des Reinigungsvorgangs bei einer Schwenkbewegung von der einen Endstellung in die andere Endstellung der zwei Endstellungen einen Winkelbereich 21 von 360° oder mehr abläuft, besonders bevorzugt läuft der Wischerarm 14 während des Reinigungsvorgangs einen Winkelbereich 21 von genau 365° ab. Hierdurch werden von dem Wischerblatt 15 auf der Frontscheibe 12 befindliche Verunreinigungen aus dem Sichtbereich des Bedieners in einen Bereich der Frontscheibe 12 verlagert, der nicht im Sichtbereich des Bedieners liegt. Bei einer Verschwänkung des Wischerarms 14 über einen Winkelbereich 21 von 360° oder mehr ist der Wischerarm 14 sowohl in der einen Endstellung als auch in der anderen Endstellung jeweils in einem außenseitigen Oberflächenbereich der Frontscheibe 12 positioniert, der hinter der Lenksäule 5 der Kabine 1 liegt.

Die - in den FIGs. nicht dargestellte - Vielzahl an Spritzdüsen kann wahlweise unmittelbar im Wischerblatt 15 oder aber in einer parallel zum Wischerblatt 15 verlaufenden - in den FIGs. ebenfalls nicht dargestellten - Sprühleiste ausgebildet sein. Ein Abstand zwischen den Spritzdüsen der Vielzahl an Spritzdüsen kann äquidistant entlang der Länge des Wischerblatts 15 sein, gleichmäßig oder progressiv entlang der Länge des Wischerblatts 15 zunehmen oder aber gleichmäßig oder degressiv entlang der Länge des Wischerblatts 15 abnehmen. Weiterhin ist es möglich, dass die Spritzdüsen der Vielzahl an Spritzdüsen derart ausgebildet sind, dass die mittels der Spritzdüsen auf die Frontscheibe 12 applizierte Menge an Waschflüssigkeit entlang der Länge des Wischerblatts 15 gleichmäßig ist, gleichmäßig oder progressiv zunimmt oder aber gleichmäßig oder degressiv abnimmt. Der Wischerarm 14 kann ferner entlang der Länge des Wischerblatts 15 mindestens zwei Applikationsbereiche umfassen. Ein Abstand zwischen den Spritzdüsen und/oder eine Applikationsmenge der Spritzdüsen der Vielzahl an Spritzdüsen kann sich bei einer derartigen Ausgestaltung des Wischerarms 14 mit mindestens zwei Applikationsbereichen im ersten Applikationsbereich von einem Abstand zwischen den Spritzdüsen und/oder einer Applikationsmenge im zweiten Applikationsbereich unterscheiden. Weiterhin können die Spritzdüsen der Vielzahl an Spritzdüsen derart ausgebildet sein, dass die von jeder Spritzdüse der Vielzahl an Spritzdüsen applizierte Waschflüssigkeit wahlweise als Flachstrahl, Vollstrahl, Hohlkegelstrahl oder Vollkegelstrahl auf die Frontscheibe 12 appliziert wird. Die verschiedenen erfindungsgemäßen Ausgestaltungen der Spritzdüsen erlauben das Reinigungsverhalten der Wischeranlage flexibel anzupassen, sodass für verschiedene Typen von landwirtschaftlichen Erntemaschinen 1, Erntevorgängen und/oder Erntebedingungen ein entsprechendes optimales Reinigungsverhalten eingestellt werden kann.

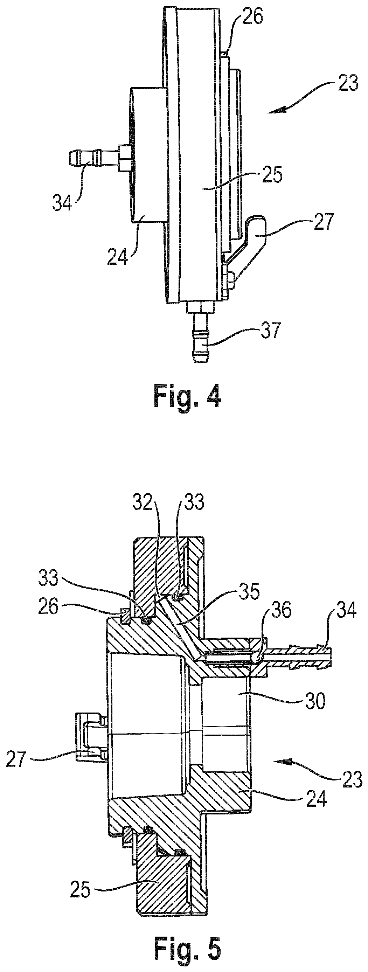

Damit die im Tank 19 bevorratete Waschflüssigkeit mittels der Pumpe 18 zum Wischerarm 14 bzw. Wischerblatt 15 der Wischeranlage 13 gefördert werden kann, umfasst die Wischeranlage 13 eine Drehdurchführung 23, die insbesondere in den FIGs. 4 und 5 dargestellt ist. Die Drehdurchführung 23 wiederum umfasst einen an der Frontscheibe 12 angeordneten Stator 24 und einen an dem Stator 24 relativ zu diesem drehbeweglich angeordneten Rotor 25. Der Rotor 25 ist außenseitig auf den Stator 24 aufgesetzt und mittels einer Sicherung 26, vorzugsweise einem Sicherungsring, vor einem axialen Lösen von dem Stator 24 gesichert. Der Rotor 25 umfasst ein Halteelement 27, an dem der Wischerarm 14 befestigt ist. Sowohl der Stator 24 als auch der Rotor 25 sind jeweils als ringförmiges, rotationssymmetrisches Bauteil ausgebildet. Der Stator 24 ist in einer Ausnehmung 28 in der Frontscheibe 12 der Kabine 1 angeordnet und an dem die Welle 16 antreibenden Motor 20, insbesondere einem Gehäuse des Motors 20, befestigt bzw. montiert. Hierzu kann eine Hülse 29 vorgesehen sein, die im montierten Zustand der Wischeranlage 13 endseitig einerseits in einer zentralen mit der Ausnehmung 28 in der Frontscheibe 12 fluchtenden Ausnehmung 30 des Stators 24 und andererseits in einer Aufnahme 31 des Motors 20 befestigt ist. Die Hülse 29 kann vorzugsweise als eine Hülse ausgebildet sein, die endseitig für die Befestigung am Motor 20 eine sechskantige Außenkontur und endseitig für die Befestigung am Stator 24 eine zylindrische Außenkontur aufweist. Innerhalb der Hülse 29 verläuft die Welle 16, die endseitig jeweils drehfest einerseits mit dem Motor 20 und andererseits mit dem Wischerarm 14 verbunden ist. Die Welle 16 ist in der Hülse 29 und somit innerhalb des Stators 24 drehbeweglich gelagert.

Wie insbesondere in FIG. 5 dargestellt, umfasst die Drehdurchführung 23 zur Übertragung bzw. Förderung der Waschflüssigkeit von der Pumpe 18 zum Wischerarm 14 bzw. der Vielzahl an Spritzdüsen während des Reinigungsvorgangs einen Ringraum 32, der zwischen dem Stator 24 und dem Rotor 25 ausgebildet ist. Der zwischen dem Stator 24 und dem Rotor 25 ausgebildete Ringraum 32 ist mittels mindestens eines Dichtungselements 33, das vorzugsweise als Dichtungsring, insbesondere O-Ring, ausgebildet ist, abgedichtet. Der Stator 24 umfasst einen Anschlussstutzen 34, mittels dem der Stator 24 mit der Pumpe 18 zur Förderung der Waschflüssigkeit strömungstechnisch verbunden ist. Hierzu ist an den Anschlussstutzen 34 des Stators 24 einerseits und die Pumpe 18 andererseits eine - in den FIGs. nicht dargestellte - Schlauchleitung angeschlossen. Neben dem Anschlussstutzen 34 umfasst der Stator 24 einen Kanal 35, mittels dem der Anschlussstutzen 34 mit dem Ringraum 32 strömungstechnisch verbunden ist. Der Verlauf des Kanals 35 ist ausgehend von dem Anschlussstutzen 34 zum Ringraum 32 hin geneigt, vorzugsweise unter einem Winkel von im Wesentlichen 60°, besonders bevorzugt genau 60°, ausgehend von einer mittig durch den Anschlussstutzen 34 verlaufenden Längsachse des Anschlussstutzens 34 im Uhrzeigersinn. In dem in dem Stator 24 ausgebildeten Kanal 35 ist ein Rückschlagventil 36 angeordnet. Das Rückschlagventil 36, welches vorzugsweise mittels einer federbelasteten Kugel gebildet ist, sorgt dabei dafür, dass schwerkraftbedingt keine Waschflüssigkeit zum Wischerarm 14 bzw. Wischerblatt 15 gefördert wird, wenn die Pumpe 18 deaktiviert ist und der die Waschflüssigkeit bevorratende Tank 19 höher liegt als eine oder mehrere Spritzdüsen der Vielzahl an Spritzdüsen.

Entsprechend zum Stator 24 umfasst auch der Rotor 25 einen Anschlussstutzen 37, mittels dem der Rotor 25 mit dem Wischerarm 14, insbesondere der Vielzahl an Spritzdüsen, strömungstechnisch verbunden ist. Hierzu ist an dem Anschlussstutzen 37 des Rotors 25 einerseits und an einem - in den FIGs. nicht dargestellten - Anschlussstutzen am Wischerarm 14 andererseits eine Schlauchleitung 38 angeschlossen. Neben dem Anschlussstutzen 37 umfasst auch der Rotor 25 einen Kanal 39, mittels dem der Ringraum 32 mit dem Anschlussstutzen 37 strömungstechnisch verbunden ist. Die Kanäle 35, 39 im Stator 24 und Rotor 25 der Drehdurchführung 23 sind jeweils als Bohrungen in den entsprechenden Komponenten ausgebildet.

Die Aktivierung eines Reinigungsvorgangs mittels des Wischerarms 14 erfolgt über die Betätigung eines - in den FIGs. nicht dargestellten - Lenkstockschalters an der Lenksäule 5. Ein Betätigen des Lenkstockschalters und/oder von Knöpfen am Lenkstockschalter sorgt dafür, dass der Motor 20 und/oder die Pumpe 18 der Wischeranlage 13 angesteuert werden, um verschiedene Wischerprogramme, beispielsweise ein reversierendes Dauerwischen des Wischerarms 14, ein reversierendes Intervallwischen des Wischerarms 14 oder ein reversierendes Dauerwischen oder Intervallwischen des Wischerarms 14 mit gleichzeitiger Applikation von Waschflüssigkeit, auszulösen.

Wie eingangs bereits angemerkt, ist die Wischeranlage 13 gleichermaßen für alle Scheiben, insbesondere die Heckscheibe, der Kabine 3 der landwirtschaftlichen Erntemaschine 1 einsetzbar.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

| | | | |
|---|---|---|---|
| 1 | Landwirtschaftliche Erntemaschine | 21 | Winkelbereich |
| 2 | Feldhäcksler | 22 | Oberflächenbereich |
| 3 | Kabine | 23 | Drehdurchführung |
| 4 | Fahrersitz | 24 | Stator |
| 5 | Lenksäule | 25 | Rotor |
| 6 | Lenkrad | 26 | Sicherung |
| 7 | Eingabeeinheit | 27 | Halteelement |
| 8 | Tragstruktur | 28 | Ausnehmung |
| 9 | Dach | 29 | Hülse |
| 10 | Tragsäule | 30 | Ausnehmung |
| 11 | Tragsäule | 31 | Aufnahme |
| 12 | Frontscheibe | 32 | Ringraum |
| 13 | Wischeranlage | 33 | Dichtungselement |
| 14 | Wischerarm | 34 | Anschlussstutzen |
| 15 | Wischerblatt | 35 | Kanal |
| 16 | Welle | 36 | Rückschlagventil |
| 17 | Oberfläche der Frontscheibe | 37 | Anschlussstutzen |
| 18 | Pumpe | 38 | Schlauchleitung |
| 19 | Tank | 39 | Kanal |
| 20 | Motor | | |

## Patentansprüche

1. Kabine (3) einer landwirtschaftlichen Erntemaschine (1), insbesondere eines Feldhäckslers (2), mit einer Wischeranlage (13) zur Reinigung einer Scheibe, insbesondere einer Frontscheibe (12), der Kabine (3), wobei die Wischeranlage (13) einen Wischerarm (14) mit einem Wischerblatt (15) umfasst, der an einer durch die Scheibe, insbesondere Frontscheibe (12), verlaufenden, motorisch antreibbaren Welle (16) drehfest befestigt ist,
wobei der Wischerarm (14) während eines Reinigungsvorgangs reversierend zwischen zwei Endstellungen verschwenkbar ist,
wobei der Wischerarm (14) während des Reinigungsvorgangs bei einer Schwenkbewegung von der einen Endstellung in die andere Endstellung der zwei Endstellungen einen Winkelbereich (21) von mehr als 180° abläuft, **dadurch gekennzeichnet, dass** die Wischeranlage (13) eine Pumpe (18) zur Förderung von Waschflüssigkeit aus einem Tank (19) zu dem Wischerarm (14) umfasst und der Wischerarm (14) entlang der Länge des Wischerblatts (15) eine Vielzahl an Spritzdüsen zur Applikation der Waschflüssigkeit auf der Scheibe, insbesondere Frontscheibe (12), während des Reinigungsvorgangs umfasst, wobei die Wischeranlage (13) eine Drehdurchführung (23) umfasst, die einen an der Scheibe, insbesondere Frontscheibe (12), angeordneten Stator (24) und einen an dem Stator (24) relativ zu diesem drehbeweglich angeordneten Rotor (25) mit einem Halteelement (27) umfasst, an dem der Wischerarm (14) befestigt ist.

2. Kabine (3) nach Anspruch 2, **dadurch gekennzeichnet, dass** der Wischerarm (14) während des Reinigungsvorgangs bei der Schwenkbewegung von der einen Endstellung in die andere Endstellung der zwei Endstellungen einen Winkelbereich (21) von 360° oder mehr, vorzugsweise 365°, abläuft.

3. Kabine (3) nach Anspruch 2 oder 3, **dadurch gekennzeichnet, dass** die Vielzahl an Spritzdüsen unmittelbar im Wischerblatt (15) ausgebildet ist oder der Wischerarm (14) eine parallel zum Wischerblatt (15) verlaufende Sprühleiste umfasst, in der die Vielzahl an Spritzdüsen ausgebildet ist.

4. Kabine (3) nach einem der Ansprüche 1 bis 3, **dadurch gekennzeichnet, dass** ein Abstand zwischen den Spritzdüsen der Vielzahl an Spritzdüsen äquidistant entlang der Länge des Wischerblatts (15) ist, gleichmäßig oder progressiv entlang der Länge des Wischerblatts (15) zunimmt oder gleichmäßig oder degressiv entlang der Länge des Wischerblatts (15) abnimmt.

5. Kabine (3) nach einem der Ansprüche 1 bis 4, **dadurch gekennzeichnet, dass** die Spritzdüsen der Vielzahl an Spritzdüsen derart ausgebildet sind, dass die mittels der Spritzdüsen auf die Scheibe, insbesondere Frontscheibe (12), applizierte Menge an Waschflüssigkeit entlang der Länge des Wischerblatts (15) gleichmäßig ist, gleichmäßig oder progressiv zunimmt oder gleichmäßig oder degressiv abnimmt.

6. Kabine (3) nach einem der Ansprüche 1 bis 5, **dadurch gekennzeichnet, dass** der Wischerarm (14) entlang der Länge des Wischerblatts (15) mindestens zwei Applikationsbereiche umfasst, wobei sich ein Abstand zwischen den Spritzdüsen und/oder eine Applikationsmenge der Spritzdüsen im ersten Applikationsbereich von einem Abstand zwischen den Spritzdüsen und/oder einer Applikationsmenge im zweiten Applikationsbereich unterscheidet.

7. Kabine (3) nach einem der Ansprüche 1 bis 6, **dadurch gekennzeichnet, dass** die Spritzdüsen der Vielzahl an Spritzdüsen derart ausgebildet sind, dass die von jeder Spritzdüse applizierte Waschflüssigkeit als Flachstrahl, Vollstrahl, Hohlkegelstrahl oder Vollkegelstrahl auf die Scheibe, insbesondere Frontscheibe (12), appliziert wird.

8. Kabine (3) nach einem der Ansprüche 1 bis 7, **dadurch gekennzeichnet, dass** die Drehdurchführung (23) einen Ringraum (32) umfasst, der zwischen dem Stator (24) und dem Rotor (25) ausgebildet ist und der der Förderung der Waschflüssigkeit von der Pumpe (18) zu dem Wischerarm (14) während des Reinigungsvorgangs dient.

9. Kabine (3) nach Anspruch 8, **dadurch gekennzeichnet, dass** der zwischen dem Stator (24) und dem Rotor (25) ausgebildete Ringraum (32) mittels mindestens eines Dichtungselements (33), vorzugsweise eines Dichtungsrings, insbesondere eines O-Rings, abgedichtet ist.

10. Kabine (3) nach Anspruch 8 oder 9, **dadurch gekennzeichnet, dass** der Stator (24) einen Anschlussstutzen (34), mittels dem der Stator (24), vorzugsweise über eine Schlauchleitung, mit der Pumpe (18) zur Förderung der Waschflüssigkeit strömungstechnisch verbunden ist, und einen Kanal (35), mittels dem der Anschlussstutzen (34) mit dem Ringraum (32) strömungstechnisch verbunden ist, umfasst, wobei in dem Kanal (35) des Stators (24) ein Rückschlagventil (36) angeordnet ist.

11. Kabine (3) nach einem der Ansprüche 8 bis 10, **dadurch gekennzeichnet, dass** der Rotor (25) einen Anschlussstutzen (37), mittels dem der Rotor (25), vorzugsweise über eine Schlauchleitung (38), mit dem Wischerarm (14), insbesondere der Vielzahl an Spritzdüsen, strömungstechnisch verbunden ist, und einen Kanal (39), mittels dem der Ringraum (32) mit dem Anschlussstutzen (37) strömungstechnisch verbunden ist, umfasst.

12. Kabine (3) nach einem der Ansprüche 1 bis 11, **dadurch gekennzeichnet, dass** die Scheibe, insbesondere Frontscheibe (12), der Kabine (3) eine Ausnehmung (28) umfasst, in der der Stator (24) der Drehdurchführung (23) angeordnet ist, wobei der Stator (24) an einem die Welle (16) antreibenden Motor (20) befestigt ist.

13. Kabine (3) nach einem der Ansprüche 1 bis 12, **dadurch gekennzeichnet, dass** die mit dem Wischerarm (14) drehfest verbundene Welle (16) der Wischeranlage (13) innerhalb des Stators (24) der Drehdurchführung (23) drehbeweglich gelagert ist.

14. Kabine (3) nach einem der Ansprüche 1 bis 13, **dadurch gekennzeichnet, dass** die Pumpe (18) zur Förderung der Waschflüssigkeit zu dem Wischerarm (14), der Motor (20) zum Antreiben der Welle (16) der Wischeranlage (13) und/oder der Tank (19) zwischen einer Lenksäule (5) und der Frontscheibe (12) im Kabineninneren angeordnet ist.

15. Landwirtschaftliche Erntemaschine (1), insbesondere Feldhäcksler (2), mit einer Kabine (3) nach einem der Ansprüche 1 bis 14.

## Claims

1. Cab (3) of an agricultural harvester (1), in particular a forage harvester (2), having a wiper system (13) for cleaning a window, in particular a windscreen (12), of the cab (3), wherein the wiper system (13) comprises a wiper arm (14) having a wiper blade (15), which is fastened for conjoint rotation to a motor-drivable shaft (16) which extends through the window, in particular windscreen (12),
wherein the wiper arm (14) is reversingly pivotable between two end positions during a cleaning operation,
wherein, during the cleaning operation, the wiper arm (14) passes through an angular range (21) of more than 180° during a pivoting movement from the one end position into the other end position of the two end positions, **characterized in that** the wiper system (13) comprises a pump (18) for conveying washer fluid from a tank (19) to the wiper arm (14), and the wiper arm (14) along the length of the wiper blade (15) comprises a multiplicity of spray nozzles for applying the washer fluid to the window, in particular the windscreen (12), during the cleaning operation, wherein the wiper system (13) comprises a rotary feedthrough (23) comprising a stator (24), which is arranged on the window, in particular the windscreen (12), and a rotor (25), which is arranged on the stator (24) so as to be rotatable relative thereto and has a holding element (27) to which the wiper arm (14) is fastened.

2. Cab (3) according to Claim 2, **characterized in that**, during the cleaning operation, the wiper arm (14) passes through an angular range (21) of 360° or more, preferably 365°, during the pivoting movement from the one end position into the other end position of the two end positions.

3. Cab (3) according to Claim 2 or 3, **characterized in that** the multiplicity of spray nozzles is formed directly in the wiper blade (15), or the wiper arm (14) comprises a spray bar which runs parallel to the wiper blade (15) and in which the multiplicity of spray nozzles is formed.

4. Cab (3) according to any one of Claims 1 to 3, **characterized in that** a distance between the spray nozzles of the multiplicity of spray nozzles is equidistant along the length of the wiper blade (15), increases uniformly or progressively along the length of the wiper blade (15) or decreases uniformly or degressively along the length of the wiper blade (15).

5. Cab (3) according to any one of Claims 1 to 4, **characterized in that** the spray nozzles of the multiplicity of spray nozzles are designed in such a way that the quantity of washer fluid applied to the window, in particular the windscreen (12), by means of the spray nozzles along the length of the wiper blade (15) is uniform, increases uniformly or progressively or decreases uniformly or degressively.

6. Cab (3) according to any one of Claims 1 to 5, **characterized in that** the wiper arm (14) comprises at least two application regions along the length of the wiper blade (15), wherein a distance between the spray nozzles and/or an application quantity of the spray nozzles in the first application region differs from a distance between the spray nozzles and/or an application quantity in the second application region.

7. Cab (3) according to any one of Claims 1 to 6, **characterized in that** the spray nozzles of the multiplicity of spray nozzles are designed in such a way that the washer fluid applied by each spray nozzle is applied to the window, in particular the windscreen (12), as a flat jet, full jet, hollow conical jet or solid conical jet.

8. Cab (3) according to any one of Claims 1 to 7, **characterized in that** the rotary feedthrough (23) comprises an annular chamber (32) which is formed between the stator (24) and the rotor (25) and which serves to convey the washer fluid from the pump (18) to the wiper arm (14) during the cleaning operation.

9. Cab (3) according to Claim 8, **characterized in that** the annular chamber (32) formed between the stator (24) and the rotor (25) is sealed by means of at least one sealing element (33), preferably a sealing ring, in particular an O-ring.

10. Cab (3) according to Claim 8 or 9, **characterized in that** the stator (24) comprises a connecting piece (34), by means of which the stator (24) is fluidically connected, preferably via a hose line, to the pump (18) for conveying the washer fluid, and a channel (35), by means of which the connecting piece (34) is fluidically connected to the annular chamber (32), wherein a nonreturn valve (36) is arranged in the channel (35) of the stator (24).

11. Cab (3) according to any one of Claims 8 to 10, **characterized in that** the rotor (25) comprises a connecting piece (37), by means of which the rotor (25) is fluidically connected, preferably via a hose line (38), to the wiper arm (14), in particular to the multiplicity of spray nozzles, and a channel (39), by means of which the annular chamber (32) is fluidically connected to the connecting piece (37).

12. Cab (3) according to any one of Claims 1 to 11, **characterized in that** the window, in particular the windscreen (12), of the cab (3) comprises a recess (28) in which the stator (24) of the rotary feedthrough (23) is arranged, wherein the stator (24) is fastened to a motor (20) driving the shaft (16).

13. Cab (3) according to any one of Claims 1 to 12, **characterized in that** the shaft (16), which is connected for conjoint rotation to the wiper arm (14), of the wiper system (13) is mounted rotatably within the stator (24) of the rotary feedthrough (23).

14. Cab (3) according to any one of Claims 1 to 13, **characterized in that** the pump (18) for conveying the washer fluid to the wiper arm (14), the motor (20) for driving the shaft (16) of the wiper system (13) and/or the tank (19) is/are arranged inside the cab between a steering column (5) and the windscreen (12).

15. Agricultural harvester (1), in particular forage harvester (2), having a cab (3) according to any one of Claims 1 to 14.

## Revendications

1. Cabine (3) d'une machine de récolte (1) agricole, en particulier d'une récolteuse-hacheuse (2), dotée d'un système d'essuie-glace (13) destiné au nettoyage d'une vitre, notamment d'un pare-brise (12), de la cabine (3), le système d'essuie-glace (13) comprenant un bras d'essuie-glace (14) avec un balai d'essuie-glace (15), qui est fixé avec possibilité de rotation sur un arbre (16) pouvant être entraîné par moteur et s'étendant à travers la vitre, notamment le pare-brise (12),
sachant que pendant une opération de nettoyage, le bras d'essuie-glace (14) peut être pivoté en va-et-vient entre deux positions extrêmes,
sachant que pendant l'opération de nettoyage, le bras d'essuie-glace (14) balaie, lors d'un mouvement pivotant de l'une des positions extrêmes à l'autre position extrême des deux positions extrêmes, une plage angulaire (21) de plus de 180°, **caractérisée en ce que** le système d'essuie-glace (13) comprend une pompe (18) destinée à transporter un liquide de lavage à partir d'un réservoir (19) jusqu'au bras d'essuie-glace (14), et le bras d'essuie-glace (14) comporte, sur la longueur du balai d'essuie-glace (15), une pluralité de buses de projection destinées à appliquer le liquide de lavage sur la vitre, notamment le pare-brise (12), pendant l'opération de nettoyage, le système d'essuie-glace (13) comprenant un raccord tournant (23) qui comporte un stator (24) disposé sur la vitre, notamment le pare-brise (12), et un rotor (25) qui est monté sur le stator (24), avec possibilité de rotation par rapport à celui-ci, et est doté d'un élément de support (27) sur lequel est fixé le bras d'essuie-glace (14).

2. Cabine (3) selon la revendication 2, **caractérisée en ce que** pendant l'opération de nettoyage, le bras d'essuie-glace (14) balaie, lors du mouvement pivotant de l'une des positions extrêmes à l'autre position extrême des deux positions extrêmes, une plage angulaire (21) de 360° ou plus, de préférence de 365°.

3. Cabine (3) selon la revendication 2 ou 3, **caractérisée en ce que** la pluralité de buses de projection est réalisée directement dans le balai d'essuie-glace (15), ou que le bras d'essuie-glace (14) comprend une baguette de pulvérisation qui s'étend parallèlement au balai d'essuie-glace (15) et dans laquelle est réalisée la pluralité de buses de projection.

4. Cabine (3) selon une des revendications 1 à 3, **caractérisée en ce qu'**un espacement entre les buses de projection de la pluralité de buses de projection est équidistant sur la longueur du balai d'essuie-glace (15), augmente de manière régulière ou progressive sur la longueur du balai d'essuie-glace (15) ou diminue de manière régulière ou dégressive sur la longueur du balai d'essuie-glace (15).

5. Cabine (3) selon une des revendications 1 à 4, **caractérisée en ce que** les buses de projection de la pluralité de buses de projection sont réalisées de manière à ce que la quantité de liquide de lavage appliquée sur la vitre, notamment le pare-brise (12), au moyen des buses de projection, soit uniforme sur la longueur du balai d'essuie-glace (15), augmente de manière régulière ou progressive ou diminue de manière régulière ou dégressive.

6. Cabine (3) selon une des revendications 1 à 5, **caractérisée en ce que** le bras d'essuie-glace (14) comprend au moins deux zones d'application sur la longueur du balai d'essuie-glace (15), où une distance entre les buses de projection et/ou une quantité d'application des buses de projection dans la première zone d'application est différente d'une distance entre les buses de projection et/ou d'une quantité d'application dans la deuxième zone d'application.

7. Cabine (3) selon une des revendications 1 à 6, **caractérisée en ce que** les buses de projection de la pluralité de buses de projection sont réalisées de manière à ce que le liquide de lavage appliqué par chaque buse de projection soit appliqué sous forme de jet plat, de jet plein, de jet à cône creux ou de jet à cône plein sur la vitre, notamment le pare-brise (12).

8. Cabine (3) selon une des revendications 1 à 7, **caractérisée en ce que** le raccord tournant (23) comprend un espace annulaire (32) qui est formé entre le stator (24) et le rotor (25) et qui sert au transport du liquide de lavage depuis la pompe (18) jusqu'au bras d'essuie-glace (14) pendant l'opération de nettoyage.

9. Cabine (3) selon la revendication 8, **caractérisée en ce que** l'espace annulaire (32) formé entre le stator (24) et le rotor (25) est rendu étanche à l'aide d'au moins un élément d'étanchéité (33), de préférence un anneau d'étanchéité, notamment un anneau torique.

10. Cabine (3) selon la revendication 8 ou 9, **caractérisée en ce que** le stator (24) comprend une tubulure de raccordement (34), au moyen de laquelle le stator (24) est relié sur le plan de l'écoulement, de préférence par un tuyau souple, à la pompe (18) destinée au transport du liquide de lavage, et un conduit (35) au moyen duquel la tubulure de raccordement (34) est reliée sur le plan de l'écoulement à l'espace annulaire (32), un clapet de non-retour (36) étant disposé dans le conduit (35) du stator (24).

11. Cabine (3) selon une des revendications 8 à 10, **caractérisée en ce que** le rotor (25) comprend une tubulure de raccordement (37), au moyen de laquelle le rotor (25) est relié sur le plan de l'écoulement au bras d'essuie-glace (14), notamment à la pluralité de buses de projection, de préférence par un tuyau souple (38), et un conduit (39) au moyen duquel l'espace annulaire (32) est relié sur le plan de l'écoulement à la tubulure de raccordement (37).

12. Cabine (3) selon une des revendications 1 à 11, **caractérisée en ce que** la vitre, notamment le pare-brise (12), de la cabine (3) comporte un évidement (28) dans lequel est disposé le stator (24) du raccord tournant (23), le stator (24) étant fixé à un moteur (20) entraînant l'arbre (16).

13. Cabine (3) selon une des revendications 1 à 12, **caractérisée en ce que** l'arbre (16) du système d'essuie-glace (13), qui est lié de manière solidaire en rotation au bras d'essuie-glace (14), est monté de façon mobile en rotation à l'intérieur du stator (24) du raccord tournant (23).

14. Cabine (3) selon une des revendications 1 à 13, **caractérisée en ce que** la pompe (18) destinée à transporter le liquide de lavage jusqu'au bras d'essuie-glace (14), le moteur (20) destiné à entraîner l'arbre (16) du système d'essuie-glace (13), et/ou le réservoir (19) sont installés à l'intérieur de la cabine, entre une colonne de direction (5) et le pare-brise (12).

15. Machine de récolte (1) agricole, en particulier récolteuse-hacheuse (2), dotée d'une cabine (3) selon une des revendications 1 à 14.
